(19) Europäisches Patentamt

European Patent Office

Office européen des brevets

(11) **EP 1 203 658 A1**

(12) **EUROPEAN PATENT APPLICATION**

(43) Date of publication:
08.05.2002 Bulletin 2002/19

(51) Int Cl.⁷: **B32B 31/12**, G11B 7/26, B29C 65/48, C09J 5/00

(21) Application number: 01125449.7

(22) Date of filing: 05.11.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 06.11.2000 JP 2000338039
14.03.2001 JP 2001072865

(71) Applicant: **DAINIPPON INK AND CHEMICALS, INC.**
**Itabashi-ku Tokyo (JP)**

(72) Inventors:
• **Ebisawa, Shouei**
  **Kounosu-shi, Saitama-ken (JP)**
• **Ito, Daisuke**
  **Ageo-shi, Saitama-ken (JP)**

(74) Representative: **Albrecht, Thomas, Dr. et al**
**Kraus & Weisert,**
**Thomas-Wimmer-Ring 15**
**80539 München (DE)**

(54) **Method for bonding members, and disc manufacturing method and device**

(57) A method for manufacturing discs by bonding two disc substrates (1a, 1b) using a cationic polymerization type ultraviolet curable composition (S) as an adhesive to produce a disc (1). The method includes the steps of: applying the cationic polymerization type ultraviolet curable composition onto a part of an adhering surface of one of the two disc substrates; radiating ultraviolet light onto the cationic polymerization type ultraviolet curable composition; bonding the disc substrate to the other disc substrate via the cationic polymerization type ultraviolet curable composition which has been irradiated by the ultraviolet light; and spreading the cationic polymerization type ultraviolet curable composition which is present between the two disc substrates.

FIG. 1

Printed by Jouve, 75001 PARIS (FR)

EP 1 203 658 A1

**Description**

BACKGROUND OF THE INVENTION

1. Field of the invention

The present invention relates to a bonding method for bonding two members by using a cationic polymerization type ultraviolet curable composition. More specifically, the present invention relates to a method for manufacturing a disc and a disc manufacturing device by which two disc substrates are bonded by using a cationic polymerization type ultraviolet curable composition to form a disc.

2. Background art

Conventionally, as a method for bonding various members, such as one made of a plastic, a method in which a hot-melt adhesive, a solvent-type adhesive, or an ultraviolet curable composition is used, or a thermal fusion method has been known.

Also, when a digital video disc or digital versatile disc (DVD) is manufactured, a method is adapted in which two disc substrates are bonded to each other by using an ultraviolet curable composition as an adhesive. The term "ultraviolet curable composition" includes at least a cationic polymerization type ultraviolet curable composition and a radical polymerization type ultraviolet curable composition. The cationic polymerization type ultraviolet curable composition is a slow-cure type composition which is not cured immediately after the radiation of ultraviolet light but starts to cure after a certain time has passed after the radiation, whereas the radical polymerization type ultraviolet curable composition is a fast-cure type composition which starts to cure immediately after the radiation of ultraviolet light. As for the radical polymerization type ultraviolet curable composition, it is required that the two disc substrates to be adhered be made of an ultraviolet light permeable material. For example, for the case where a DVD-ROM disc is manufactured, the radical polymerization type ultraviolet curable composition can be used as a disc bonding adhesive since the ultraviolet light may be radiated onto the ultraviolet curable composition through a disc substrate after one disc substrate is superimposed onto the other with the ultraviolet curable composition therebetween. However, for the case where both of two disc substrates are made of materials which do not permeate light, such as the case where a double-sided recordable DVD-RAM is manufactured, it is difficult to use a radical polymerization type ultraviolet curable composition as an adhesive since the radiation of ultraviolet light cannot be performed after one disc substrate is superimposed onto the other. On the other hand, a cationic polymerization type ultraviolet curable composition may be used for the above case in which both disc substrates to be adhered are made of ultraviolet impermeable materials since the ultraviolet light radiation process may be performed prior to the adhesion of the two discs due to the slow-cure property of the cationic polymerization type ultraviolet curable composition.

In order to bond two ultraviolet impermeable disc substrates by using the cationic polymerization type ultraviolet curable composition as an adhesive, the ultraviolet curable composition is applied onto at least one of the disc substrates, and that disc substrate is placed onto the second disc substrate so as to sandwich the ultraviolet curable composition.

It is required that the radiation of ultraviolet light be performed prior to the placement of one disc substrate onto the other. As a method which satisfies such a requirement, the ultraviolet light may be radiated onto an ultraviolet curable composition prior to the application thereof onto the disc substrate.

More specifically, in the above method, the cationic polymerization type ultraviolet curable composition may be discharged from a nozzle and dropped onto one of the disc substrates so as to form a circle on the adhering surface thereof. In this method, the radiation of ultraviolet light onto the cationic polymerization type ultraviolet curable composition is performed during the period in which the ultraviolet curable composition is discharged from the tip of the nozzle until it reaches the surface of the disc medium.

In the method in which an adhesive composition, such as a hot-melt adhesive and a solvent type adhesive, is used, there are problems, depending on the application of the members to be adhered, wherein the heat resistance property thereof becomes insufficient or wherein satisfactory bonding strength or bonding accuracy is difficult to obtain. In addition, there are problems in that the time required for the bonding process is lengthy, and it is not easy to handle the adhesive compositions.

On the other hand, in the above-mentioned method of bonding the disc substrates using the cationic polymerization type ultraviolet curable composition in which ultraviolet light is radiated during the discharge of the ultraviolet curable composition, it is not necessary to take into consideration the effect of heat from a light source on the information recording layer of the disc substrate since the ultraviolet light is not directly radiated onto the disc substrate. Also, the radiation of ultraviolet light onto the composition can be carried out uniformly and sufficiently on the entire composition by radiating ultraviolet light on the discharge path of the composition. However, since the ultraviolet curable composition is discharged from a considerably high position above the position of the disc substrate, it is not easy to accurately control the application thereof onto the adhering surface of the disc substrate. For instance, the path of the ultraviolet curable composition during the discharge may be disturbed by static electricity which is generated at portions adjacent to the path and the composition may not be applied onto the adhering surface in the desired shape, or a mass of the ultraviolet curable composition may be generated on the portion of the adhering surface first reached by the composition, and therefore, the composition may not be uniformly applied in the circumferential direction of the disc substrate.

If the ultraviolet curable composition is not accurately applied and yet the disc substrates are bonded, the composition may be forced out from the edges of the disc substrates, or on the contrary, the composition may not completely fill the space between the disc substrates and a gap may be generated.

In order to prevent the occurrence of the above phenomena, the accuracy in the application of the ultraviolet curable composition has been improved in conventional disc manufacturing devices by pre-calculating the amount of the composition to be applied. However, for cases where a large number of discs are continuously manufactured, the above-mentioned phenomena, though rare, do occur.

Accordingly, a visual inspection device is used to detect and remove a disc from which the ultraviolet curable composition protrudes or a disc having a gap between the disc substrates. In this manner, discs from which a portion of the ultraviolet curable composition protrudes will almost certainly be removed.

However, it is currently difficult to detect discs having a gap between the disc substrates even if a visual inspection device is used for that purpose. The gap between the disc substrates may be generated at an outer or inner circumferential portion of the disc, and if a disc having a gap is used for a considerable period of time, water components present between the disc substrates decrease the durability of the disc and may cause problems in reading or writing information from/ to the disc.

In addition, in the conventional disc manufacturing device, during the production of discs over a long period of time, vaporized ultraviolet curable composition may adhere and solidify in the vicinity of the discharge path (for instance, on the inner surface of a wind-guarding tube protecting the discharge path), and this may interfere with the discharge of the ultraviolet curable composition.

On the other hand, there is a method in which two disc substrates are bonded by uniformly applying or spreading an ultraviolet curable composition on at least one of the disc substrates and then radiating ultraviolet light onto the composition. The method has advantages in that the ultraviolet curable composition can be accurately and sufficiently spread on the disc substrate prior to the radiation process of the ultraviolet light and that the ultraviolet light may be uniformly radiated onto a large area of the composition after the composition has been spread on the disc substrate. However, since the surface of the disc substrate on which the adhesive composition has been applied and spread makes contact with the surface of the other disc substrate at the initial stage of the bonding process, bubbles tend to be generated and trapped in the adhesive layer, and it is difficult to eliminate the bubbles once generated.

SUMMARY OF THE INVENTION

The object of the present invention is to provide a method for bonding members and for manufacturing discs which realizes a large adhesive strength and high adhesive accuracy, and a short operation time when bonding the two members, such as disc substrates. Also, the object of the present invention is to improve the yield of products by improving the accuracy in applying an adhesive composition onto an adhering surface so that the generation of protruded adhesive composition, gaps, and bubbles between the members to be adhered is eliminated.

In order to achieve the above objectives, the inventors of the present invention found that an ultraviolet curable composition can be spread sufficiently and uniformly in a spreading process which is carried out after the composition is applied onto a member to be adhered and irradiated by ultraviolet light, and that the process is more preferable in order to improve accuracy in applying the composition. Also, the inventors of the present invention found that the irradiation of ultraviolet light onto the adhesive composition present on the members to be adhered prior to the spreading process does not cause any problems in curing the composition during or after the spreading process, and that such a procedure is more preferable in terms of preventing the generation of bubbles, and the present invention is completed.

Accordingly, as a means for achieving the above-mentioned objectives, the inventors of the present invention adopted the following methods for bonding members and manufacturing discs, and a disc manufacturing device.

Thus, the present invention provides a method for bonding two members via an ultraviolet curable composition, comprising the steps of: applying an ultraviolet curable composition to a part of a bonding area in one of the members; radiating ultraviolet light onto the ultraviolet curable composition; bonding that member to the other member via the ultraviolet curable composition which has been irradiated by the ultraviolet light; and spreading the ultraviolet curable composition which is present between the members, wherein the ultraviolet curable composition is a cationic polymerization type ultraviolet curable composition.

According to the above bonding method, since the ultraviolet light is radiated onto the ultraviolet curable composition after the composition has been applied onto the member to be bonded, it becomes possible to apply the ultraviolet curable composition from a position close to the bonding portion of the member. Accordingly, the ultraviolet curable composition may be applied accurately on a predetermined portion, and problems, such as the generation of a protruded portion of the ultraviolet curable composition and as the generation of a gap between the members, may be prevented.

Also, it becomes possible to obtain a large adhesive force by increasing the bonding area of the two members to be bonded by spreading the ultraviolet curable composition after radiating ultraviolet light onto the ultraviolet curable composition applied onto the member to be bonded. In this manner, a good sealing effect of the adhesive composition may also be obtained.

Since the two members to be bonded are adhered in the presence of the ultraviolet curable composition localized on the members to be bonded prior to the spreading process, it becomes possible to enlarge the area of the adhesive composition toward an end portion of the member while spreading the composition present between the members to be bonded. Accordingly, it is unlikely that bubbles will remain between the members to be bonded.

Also, since the ultraviolet curable composition used is a cationic polymerization type composition, the time available from the radiation of ultraviolet light until the completion of the curing process can be increased. Accordingly, the bonding process may be carried out accurately while preventing the generation of bubbles.

Moreover, the members may be bonded in a short amount of time by bonding one of the members to be bonded to the other via the ultraviolet curable composition after the radiation of ultraviolet light onto the composition. Accordingly, the present invention can be applied to a continuous process and can contribute to an improvement in the productivity thereof due to the extremely short amount of time required for the bonding process.

In the method for bonding members according to the present invention, it is preferable that the light absorption coefficient of the cationic polymerization type ultraviolet curable composition be about $2 \times 10^3$ m$^{-1}$ or less in a wavelength region between about 310 - 340 nm. In general, ultraviolet rays having a wavelength of 370 nm or less are involved in photopolymerization of the ultraviolet curable composition, and a material having a large light absorption coefficient in the wavelength region of 350 nm or less is used as a photopolymerization initiator. For this reason, in many cases, a general ultraviolet curable composition has a light absorption coefficient of $1 \times 10^4$ m$^{-1}$ or greater in a wavelength region of 340 nm or less. The term "light absorption coefficient" means the value expressed by $\alpha$ in the following equation:

$$I = I_0 \times 10^{-\alpha X}$$

where $I_0$ indicates the strength of the incident light, I indicates the strength of the transmitted light, and x indicates the transmitted distance.

Accordingly, if the light absorption coefficient of the composition is $1 \times 10^4$ m$^{-1}$, the strength of the incident light is decreased to 1/10 of its initial strength while being transmitted a distance of only 0.1 mm, and hence, most of the energy of the radiated ultraviolet light is absorbed on the surface. Accordingly, only a surface part of the composition is cured and a difference is caused in the curing stage of the composition between the surface and the inside thereof. This eventually becomes one of the causes which prevents the composition from uniformly spreading in the spreading process carried out after the radiation of ultraviolet light as in the present invention. On the other hand, if the light absorption coefficient of the composition is $2 \times 10^3$ m$^{-1}$ or less, light is transmitted a distance of more than 0.5 mm before the strength thereof is decreased to 1/10 of its initial strength. Accordingly, the volume of the composition which is involved in the absorption of energy of ultraviolet light is increased to five times or more. Therefore, partial curing of the surface due to an intense absorption of energy as mentioned above is not caused, and a uniform spreading process may be performed. Note that if a reaction seed is generated in the ultraviolet curable composition due to the absorption of ultraviolet light, a polymerization chain reaction occurs caused even in a part where no reaction seed is generated due to an insufficient transmission of ultraviolet light. Accordingly, there is no problem in the curing state of the adhesive layer after the spreading process.

According to an embodiment of the invention, it is preferable that the ultraviolet light be radiated only onto the ultraviolet curable composition which is applied onto the bonding area.

In some cases, a member to be bonded may be damaged by heat from a light source. Therefore, if the ultraviolet light is radiated only onto the ultraviolet curable composition which is applied onto the bonding area, it becomes possible to keep the member to be bonded away from the effects of heat.

The present invention also provides a method for manufacturing discs by bonding two disc substrates using a cationic polymerization type ultraviolet curable composition as an adhesive to produce a disc, comprising the steps of: applying a cationic polymerization type ultraviolet curable composition to a part of an adhering surface of one of the two disc substrates; radiating ultraviolet light onto the cationic polymerization type ultraviolet curable composition; bonding that disc substrate to the other disc substrate via the cationic polymerization type ultraviolet curable composition which has been irradiated by the ultraviolet light; and spreading the cationic polymerization type ultraviolet curable composition which is present between the two disc substrates.

According to the above method for manufacturing discs, since ultraviolet light is radiated onto the ultraviolet curable composition after the composition is applied onto the disc substrates, it is not necessary to drop the ultraviolet curable composition onto the adhering surface from above. Accordingly, the ultraviolet curable composition may be applied onto the adhering surface from a position closer to the surface, and hence, it is unlikely that problems, such as a disturbance in the discharge path, are caused, and the accuracy in the application process may be improved. In this manner, it becomes possible to prevent problems such as the generation of a protruded portion of the ultraviolet curable composition and as the generation of a gap between the substrates.

According to the method for manufacturing discs of an embodiment of the present invention, it is preferable that the light absorption coefficient of the cationic polymerization type ultraviolet curable composition be about $2 \times 10^3$ m$^{-1}$ or less in a wavelength region between about 310 - 340 nm. In the manufacturing process of the invention in which a spreading process is carried out after the radiation of ultraviolet light, a partial curing of the surface of the composition due to an intense absorption of energy hardly occurs, and a uniform spreading process may become possible if the light absorption coefficient of the cationic polymerization type ultraviolet curable composition is about $2 \times 10^3$ m$^{-1}$ or less. In this manner, an adhesive layer is uniformly formed between the disc substrates, and it becomes possible to prevent problems such as the generation of a protruded portion of the ultraviolet curable composition and as the generation of a gap between the substrates. Also, if a reaction seed is generated in the ultraviolet curable composition not only the surface of the composition by the absorption of ultraviolet light, a polymerization chain reaction occurs even in a part where no reaction seed is generated due to an insufficient transmission of ultraviolet light. Accordingly, no problem occurs in the uniformity of the curing state of the adhesive layer.

According to the method for manufacturing discs of another embodiment of the invention, it is preferable that the cationic polymerization type ultraviolet curable composition be applied so as to be concentric with the disc substrate. If the ultraviolet curable composition is applied so as to be concentric with the disc substrate, the ultraviolet curable composition spreads in the radial direction while maintaining the concentric shape. Accordingly, an adhesive layer having a uniform thickness is formed and it becomes possible to prevent problems such as the generation of a protruded portion of the ultraviolet curable composition from a part of the disc substrate or the generation of a gap between substrates due to an insufficiency in the degree of spreading.

According to the method for manufacturing discs of yet another embodiment of the invention, it is preferable that the ultraviolet light be radiated only onto the cationic polymerization type ultraviolet curable composition which is applied onto the adhering surface. It is expected, in some cases, that the information recording layer of the disc substrate may be damaged by heat from a light source. Therefore, if the ultraviolet light is radiated only onto the ultraviolet curable composition which is applied onto the adhering surface, it becomes possible to keep the member to be bonded away from the effects of heat.

According to the method for manufacturing discs of yet another embodiment of the invention, it is preferable that the two disc substrates bonded via the cationic polymerization type ultraviolet curable composition be rotated in the circumferential direction when the cationic polymerization type ultraviolet curable composition is spread. When the two disc substrates are rotated in the circumferential direction, a centrifugal force is applied to the ultraviolet curable composition present between the disc substrates and the composition spreads in the radial direction while maintaining the concentric circle shape. Accordingly, an adhesive layer having a uniform width is formed between the entire disc substrates without any gaps therebetween. In this manner, it becomes possible to prevent problems, such as the generation of a gap between the substrates due to an insufficiency in the degree of spreading.

According to the method for manufacturing discs of yet another embodiment of the invention, the discs are digital video disc or digital versatile disc (DVD). In a manufacturing method of a DVD, although a strict uniformity of an adhesive layer between the disc substrates, or a reduction in a shaft acceleration by minimizing the roughness on the surface may sometimes be required, a DVD which satisfies such requirements may be manufactured with high accuracy by forming the adhesive layer of the ultraviolet curable composition using the above-mentioned process.

The above-mentioned method for manufacturing discs is realized by using a disc manufacturing device having the following configuration. That is, the present invention also provides a disc manufacturing device which produces discs by bonding two disc substrates using a cationic polymerization type ultraviolet curable composition as an adhesive, comprising; an application device which applies the cationic polymerization type ultraviolet curable composition onto a part of an adhering surface of one of the two disc substrates; an ultraviolet light radiation device which radiates ultraviolet light onto the cationic polymerization type ultraviolet curable composition; an adhering device which adheres the disc substrate to the other disc substrate via the cationic polymerization type ultraviolet curable composition which has been irradiated by the ultraviolet light; and a spreading device which spreads the cationic polymerization type ultraviolet curable composition which is present between the two disc substrates.

According to the above disc manufacturing device, since the ultraviolet curable composition may be applied on the adhering surface from a position closer to the surface, it is unlikely that problems, such as a disturbance in a discharge path, occur, and the accuracy in an application process may be improved. In this manner, it becomes possible to prevent problems, such as the generation of a protruded portion of the ultraviolet curable composition and as the generation of a gap between the substrates.

According to the disc manufacturing device of an embodiment of the invention, it is preferable that the application device comprises a discharge member and a disc substrate rotation driving member, the discharge member discharging the cationic polymerization type ultraviolet curable composition toward the adhering surface from a predetermined position, and the disc substrate rotation driving member rotating the disc substrate having the adhering surface in the circumferential direction. If an ultraviolet curable composition is discharged toward the adhering surface from a predetermined position, and at the same time, the disc substrate having the adhering surface is rotated in the circumferential direction, the ultraviolet curable composition is applied onto the disc substrate so as to form a concentric circle on the substrate. If the disc substrate is adhered on the other disc substrate and a spreading process is carried out by rotating the disc substrates, the ultraviolet curable composition is spread while maintaining the concentric circle shape and an adhesive layer having a uniform width is formed between the entire disc substrates without any gaps therebetween.

According to the disc manufacturing device of another embodiment of the invention, it is preferable that the ultraviolet light radiation device comprises a light source and a radiation region restriction member, the light source radiating ultraviolet light onto the disc substrate onto which the cationic polymerization type ultraviolet curable composition has been applied, and the radiation region restriction member restricting a radiation region of the ultraviolet light from the light source only to the cationic polymerization type ultraviolet curable composition. As mentioned above, the information recording layer of the disc substrates may be damaged by heat from the light source. Thus, in this embodiment, the irradiation region restriction member is provided so that the ultraviolet light is radiated only on the ultraviolet curable composition applied on the adhering surface and that the information recording layer of the disc can be kept away from the affect of heat from the light source.

According to the disc manufacturing device of yet another embodiment of the invention, it is preferable that the spreading device comprises a disc rotation driving unit which holds the two disc substrates bonded via the cationic polymerization type ultraviolet curable composition and rotates the two disc substrates in the circumferential direction. When the two disc substrates are rotated in the circumferential direction, a centrifugal force is applied to the ultraviolet curable composition present between the disc substrates and the composition spreads in the radius direction while maintaining the concentric shape thereof. Accordingly, an adhesive layer having a uniform width is formed between the entire disc substrates without any gaps therebetween.

BRIEF DESCRIPTION OF THE DRAWINGS

Some of the features and advantages of the invention having been described, others will become apparent from the detailed description which follows, and from the accompanying drawings, in which:

FIG. 1 is a schematic diagram showing a plan view of the structure of an optical disc manufacturing device according to an embodiment of the present invention;

FIG. 2 is a schematic diagram showing a side view of the structure of an application device;

FIG. 3 is a schematic diagram showing a side view of the structure of an ultraviolet light radiation device;

FIG. 4 is a schematic diagram showing a side view of the structure of a spreading device;

FIG. 5 is a schematic diagram showing a plan view of the structure of another optical disc manufacturing device including a flatness maintaining stage;

FIG. 6 is a schematic diagram showing a side view of the structure of a flatness maintaining device;

FIG. 7A is a schematic diagram showing a plan view of the structure of the flatness maintaining device;

FIG. 7B is a schematic diagram showing a side view of the structure of the flatness maintaining device; and

FIGS. 8A to 8D are diagrams showing each step in the adhering process according to the second embodiment of the present invention.

DESCRIPTION OF THE PREFERRED EMBODIMENTS

The invention summarized above and defined by the enumerated claims may be better understood by referring to the following detailed description, which should be read with reference to the accompanying drawings. This detailed description of particular preferred embodiments, set out below to enable one to build and use particular implementations of the invention, is not intended to limit the enumerated claims, but to serve as particular examples of the invention.

The first embodiment according to the present invention will be described as follows by using a manufacturing process of a DVD as an example.

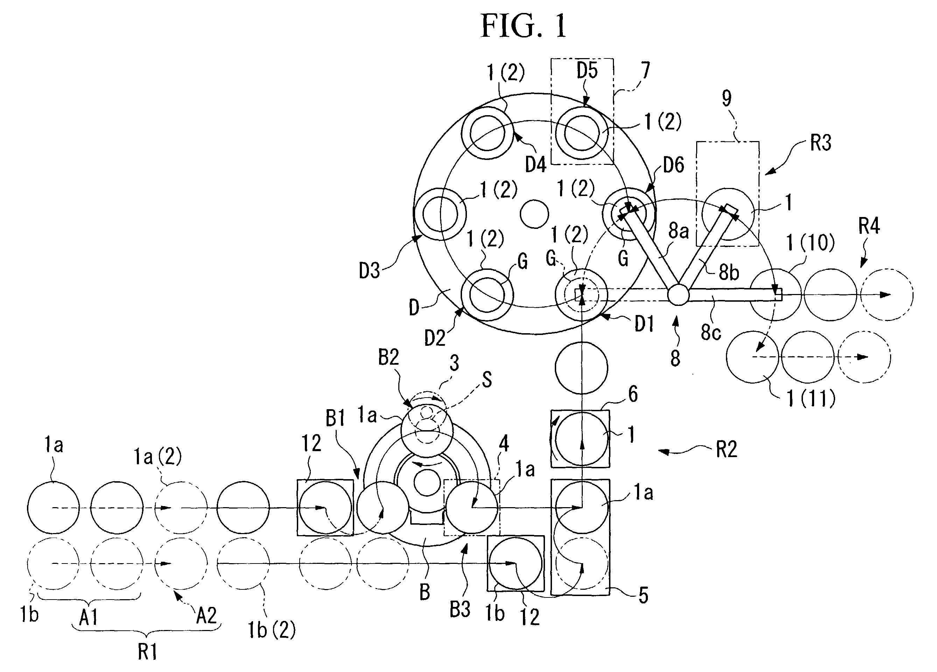

FIG. 1 is a schematic diagram showing the structure of a DVD manufacturing device. In FIG. 1, the device includes a disc substrate inlet unit R1, a disc producing unit R2, a disc inspection unit R3, and a disc outlet unit R4, all of which are accommodated in a housing not shown in the figure.

The disc substrate inlet unit R1 includes a stock area A1 and a take-out area A2. In the stock area A1, two disc substrates 1a and 1b which are bonded so as to be one disc (a DVD) are separately stored in disc holders 2 in a stacked state. In the take-out area A2, the disc substrates 1a and 1b which are retained in the disc holders 2 are taken out one by one.

The disc producing unit R2 includes an application device (an application means) 3, an ultraviolet light radiation device (an ultraviolet light radiation means) 4, an adhering device (an adhering means) 5, a spreading device (a spreading means) 6, an edge curing device 7, and a transfer device 8. The application device 3 applies a cationic type ultraviolet curable composition onto an adhering surface of the disc substrate 1a. The ultraviolet light radiation device 4 radiates ultraviolet light onto the disc substrate 1a onto which the cationic type ultraviolet curable composition has been applied. The adhering device 5 adheres the disc substrate 1a, onto which the cationic type ultraviolet curable composition has been applied, to the disc substrate 1b to produce a disc 1. The spreading device 6 spreads the composition between the disc 1. The edge curing device 7 carries out an edge curing process for the disc 1. The transfer device 8 transfers the disc 1, which has been subjected to the edge curing process, from a disc stacking/edge curing stage D to the disc inspection unit R3 and to the disc outlet unit R4.

The disc inspection unit R3 includes a disc inspection device 9 which inspects the disc 1 and determines the quality of the disc 1. The disc outlet unit R4 includes a non-defective product outlet part 10 which transfers a disc 1, which has been determined to be non-defective, to a subsequent process, and a defective product outlet part 11 which transfers a disc 1, which has been determined to be defective, to a subsequent process.

Next, manufacturing processes of the disc 1 using the DVD manufacturing device having the above-mentioned configuration will be explained.

First, the disc substrates 1a stacked in the stock area A1 are supplied to the disc producing unit R2. In the stock area A1, a plurality of the disc substrates 1a are stacked on the disc holder 2 and when the disc holder 2 is moved from the stock area A1 to the take-out area A2, the disc substrate 1a located at the top of the stack is transferred to a substrate supply position B1 on an application stage B by a conveyance means which is not shown in the figure.

When the disc substrate 1a is conveyed to the application stage B, it is turned around by a reversing device 12. This is because the disc substrates 1a are stored with their adhering surfaces facing downward in the stock area A1 in order to prevent the attachment of foreign materials or particles onto the adhering surfaces. The same is also applied to the disc substrates 1b. The disc substrates 1b are turned around by a reversing device 12 when conveyed to the adhering device 5.

The disc substrate 1a, which has been transferred to the substrate supply position B1 is moved to an adhesive composition application position B2 when the application stage B is rotated in the direction indicated by the arrow in the figure. A cationic type ultraviolet curable composition S is applied to the adhering surface of the disc substrate 1a, which has been moved to the adhesive composition application position B2, by the application device 3 so as to be in a ring shape which forming a concentric circle with the disc substrate 1a. Note that a composition having a light absorption coefficient of about $2 \times 10^3$ m$^{-1}$ or less in a wavelength region between about 310 - 340 nm is used as the cationic type ultraviolet curable composition S. Such an ultraviolet curable composition may be obtained by selectively using a material having a relatively small light absorption coefficient at 350 nm or less as photocationic polymerization initiator.

The disc substrate 1a on which the cationic type ultraviolet curable composition S has been applied is transferred to a substrate transfer position B3 when the application stage B is further rotated. The disc substrate 1a which has been moved to the substrate transfer position B3 is temporarily stopped at this position, and ultraviolet light is radiated from the ultraviolet light radiation device 4 towards the cationic type ultraviolet curable composition S. The disc substrate 1a onto which the ultraviolet light was radiated is transferred to the adhering device 5 by a transfer means not shown in the figure.

In the adhering device 5, the disc substrate 1b, which has been transferred from the take-out area A2 by a transfer means not shown in the figure and turned around, is put on standby, and the disc substrates 1a and 1b are bonded with their adhering surfaces facing each other via the cationic type ultraviolet curable composition S so as to form the disc 1.

Prior to the transfer of the disc 1 to the disc stacking/edge curing stage D by a transfer means not shown in the figure, the disc 1 is transferred to the spreading device 6. In the spreading device 6, the central hole of the disc 1 is held and rotated at a high speed in the circumferential direction so that a spreading process is carried out using centrifugal force. During this process, the center of the disc substrate 1a is aligned with that of the disc substrate 1b by aligning the central hole of the disc substrate 1a with that of the disc substrate 1b.

After the spreading process, the disc 1 is transferred to the disc stacking/edge curing stage D. On the disc stacking/edge curing stage D, the disc holders 2 are disposed in the circumferential direction with an equal interval between each other, and the disc 1 is first transferred onto the disc holder 2 located at a stacking position D1. On the disc holder 2, a plurality of the discs 1, which are transferred by a transferring device (not shown in the figure) one by one, are stacked alternately with rigid discs G.

The disc holder 2, retaining a plurality of the discs 1 in a stacked state, is moved to a curing position D2 in accordance with the rotation of the disc stacking/edge curing stage D. In the curing position D2, a plurality of the discs 1 are left for a predetermined period in a stacked state on the disc holder 2, and a curing process of the cationic type ultraviolet curable composition S is carried out. The curing process may be carried out when the discs 1 are moved to curing positions D3, D4, and D5 together with the disc holder 2 in accordance with the rotation of the disc stacking/edge curing stage D.

After the curing process, the discs 1 are transferred to an edge heating position D5 together with the disc holder 2 in accordance with the rotation of the disc stacking/edge curing stage D. At the edge heating position D5, a portion of the cationic type ultraviolet curable composition S in the vicinity of an edge of the disc 1 is heated by the edge curing device 7, and the curing of the composition S is enhanced.

After the edge curing process, the discs 1 are transferred to a separation position D6 together with the disc holder 2 in accordance with the rotation of the disc stacking/edge curing stage D. The transfer device 8 has three arms 8a, 8b, and 8c which are actuated in a synchronized manner, and when a disc 1 held by the disc holder 2 at the separation position D6 is transferred to the disc inspection device 9 by the arm 8b, another disc 1, which has been inspected, is transferred to the non-defective product outlet part 10 or to the defective product outlet part 11 by the arm 8c. Also, when the arms 8b and 8c are returned, the rigid discs G held by the disc holder 2 at the separation position D6 are transferred to the stacking position D1 by the arm 8a so that they are stacked alternately with the discs 1 which are transferred from the adhering device 5 one by one.

Discs which have been determined to be defective by the disc inspection device 9 are removed from the normal line, and only the discs which have been determined to be non-defective are stacked on the disc holder 2 disposed at the non-defective product outlet part 10 and transferred to the subsequent process together with the disc holder 2.

In the manner mentioned above, the discs 1 are stacked on the disc holder 2 alternately with the rigid disc G at the disc stacking/edge curing stage D, and the curing process of the ultraviolet curable composition are carried out as well as the heating process of the ultraviolet curable composition at the end face portion in which the composition is heated together with the disc holder 2 and cured.

As mentioned above, a certain amount of time is required for the cationic polymerization type ultraviolet curable composition S to be completely cured after the spreading process thereof, and, during that period, it is important to maintain the disc 1 in a state in which no distortion stress is applied to the disc 1 so that no distortion or deformation of the disc 1 is caused during or after the curing of the composition.

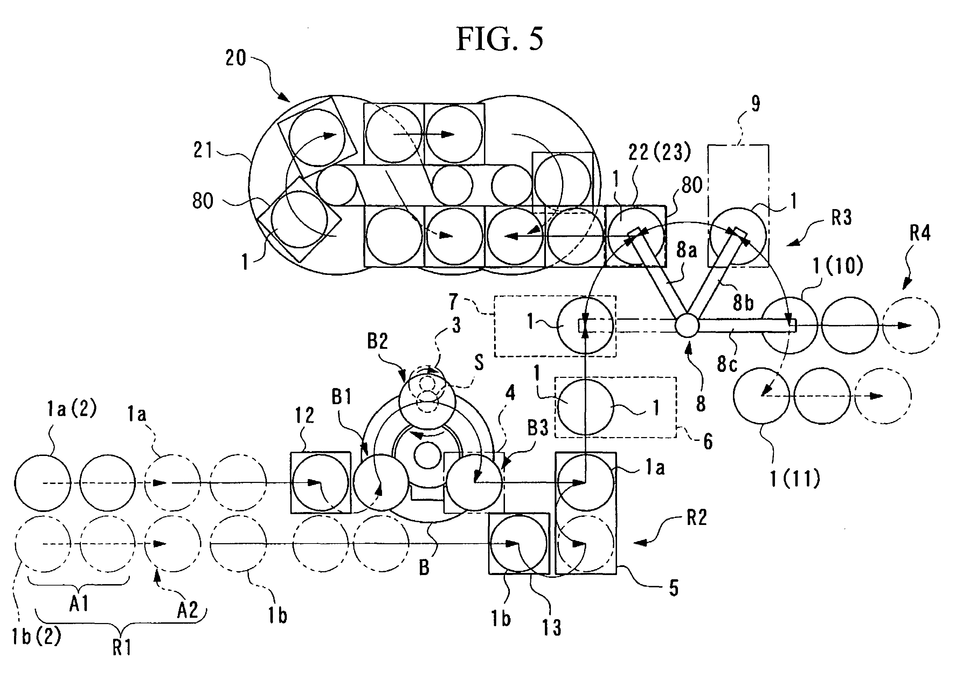

In consideration of the above, according to an embodiment of the present invention, the configuration of the stage D may be modified, such as to one having a flatness maintaining unit and a flatness maintaining device which will be described as follows. FIGS. 5, 6, 7A, and 7B are schematic diagrams showing a disc manufacturing device having a flatness maintaining device, and a flatness maintaining unit. In this device, a flatness maintaining stage including a flatness maintaining device 20 and a flatness maintaining unit is provided instead of the disc stacking/edge curing stage D.

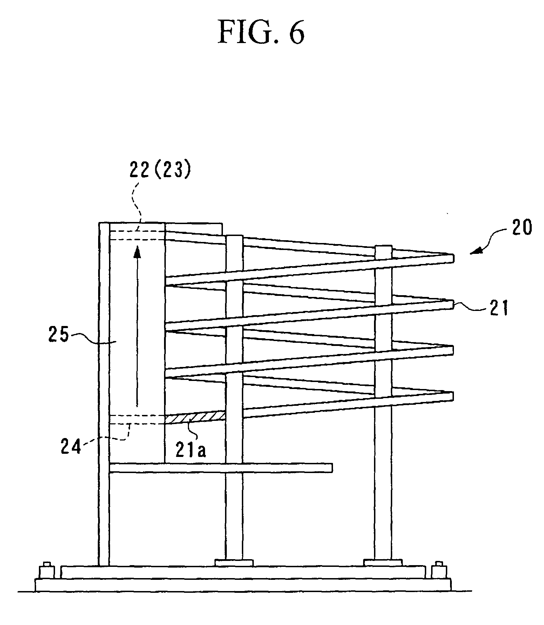

In the disc manufacturing device shown in FIGS. 5 and 6, the disc 1 on which the cationic type ultraviolet curable composition S has been spread, is transferred to the edge curing device 7 and light containing ultraviolet rays and heat rays (infrared rays) is flashed onto the composition S from the front and the back of the disc 1. At that time, the radiation of light is also carried out for the edge of the disc 1 by using, for instance, reflecting mirrors. In this manner, curing of the cationic type ultraviolet curable composition S in the vicinity of the edge of the disc 1 is enhanced, and protrusion of the composition from the edge is prevented. Also, since the composition is heated by using the heat rays, the time required for curing the entire cationic type ultraviolet curable composition S may be shortened.

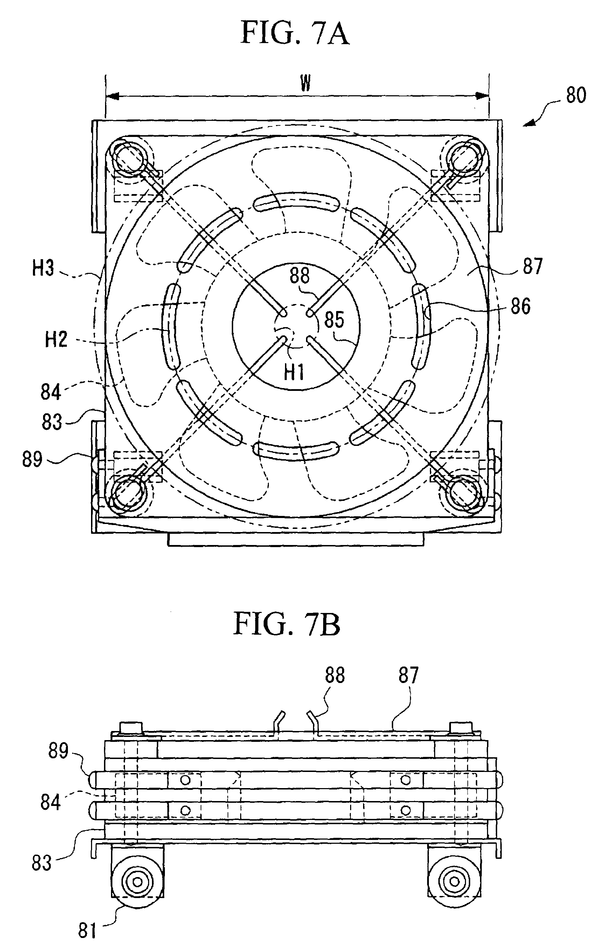

After being subjected to this process in the edge curing device 7, the disc 1 is transferred to the flatness maintaining device 20. The flatness maintaining device 20 includes a transfer path 21 of a predetermined length and a flatness maintaining unit 80 which moves on the transfer path 21 at a predetermined speed. As shown in FIGS. 7A and 7B, a holding member 87 of a flat plate shape having holes 85 and 86 is disposed on the top of the flatness maintaining unit 80, and the disc 1 is retained, in a flat state, on the holding member 87 by air-suction using a fan 84 which is accommodated in the flatness maintaining unit 80. A dc voltage is supplied to a driving unit of the fan 84 by electrodes 89 which contact with a contact electrode (not shown in the figure) which is provided along the overall length of the transfer path 21. The disc 1 is first transferred onto the flatness maintaining unit 80 located at a starting point (a first point) 22 of the transfer path 21 and is retained on the holding member 87 of the flatness maintaining unit 80 in a flat state.

The flatness maintaining unit 80 retaining the disc 1 is sequentially sent onto the transfer path 21 of the flatness maintaining device as mentioned above and a plurality of the flatness maintaining units 80 move on the transfer path 21 to an end point (a second point) 23. The transfer path 21 of the flatness maintaining device 20 is designed so that a plurality of the flatness maintaining units 80 may be moved in a row from the highest position 21 to the lowest position thereof. During that period, the disc 1 on the flatness maintaining unit 80 is maintained in a flat state for a certain period of time and curing of the cationic type ultraviolet curable composition proceeds so that the disc substrates 1a and 1b are bonded having an excellent degree of flatness without being deformed or distorted.

After being subjected to this process in the flatness maintaining device 20, the disc 1 is removed from the flatness maintaining unit 80 at the end point 23 and is transferred to the disc inspection device 9.

According to this embodiment of the invention, the starting point (the first point) 22 and the end point (the second point) 23 of the transfer path 21 are located at the same position. After the disc 1 is taken out from the flatness maintaining unit 80, another disc 1 is mounted on the flatness maintaining unit 80.

According to the embodiment, the transfer device 8 is used as a means for transferring the disc 1 from the edge curing device 7 to the flatness maintaining device 20, and from the flatness maintaining device 20 to the disc inspection device 9. Also, the disc 1 is transferred to either the non-defective product outlet part 10 or the defective product outlet part 11 from the disc inspection device 9 by the transfer device 8.

The transfer device 8 has three arms 8a, 8b, and 8c which are actuated in a synchronized manner, and when the disc 1 is transferred to the flatness maintaining device 20 from the edge curing device 7 by the arm 8a, another disc 1 is taken out from the flatness maintaining unit 80, which arrived at the end point 23 of the transfer path 21 of the flatness maintaining device 20, by the arm 8b so as to be transferred to the disc inspection device 9. At the same time, another disc 1, whose inspection has been completed, is transferred to either the non-defective product outlet part 10 or the defective product outlet part 11 by the arm 8c.

The discs which have been determined to be defective by the disc inspection device 9 are removed from the normal line, and only the discs which have been determined to be non-defective are stacked on the disc holder 2 disposed at the non-defective product outlet part 10 and transferred to the subsequent process together with the disc holder 2.

Next, the application device 3, which applies a cationic type ultraviolet curable composition onto an adhering surface of the disc substrate 1a in the DVD manufacturing device substantially having the above-mentioned configuration, will be explained.

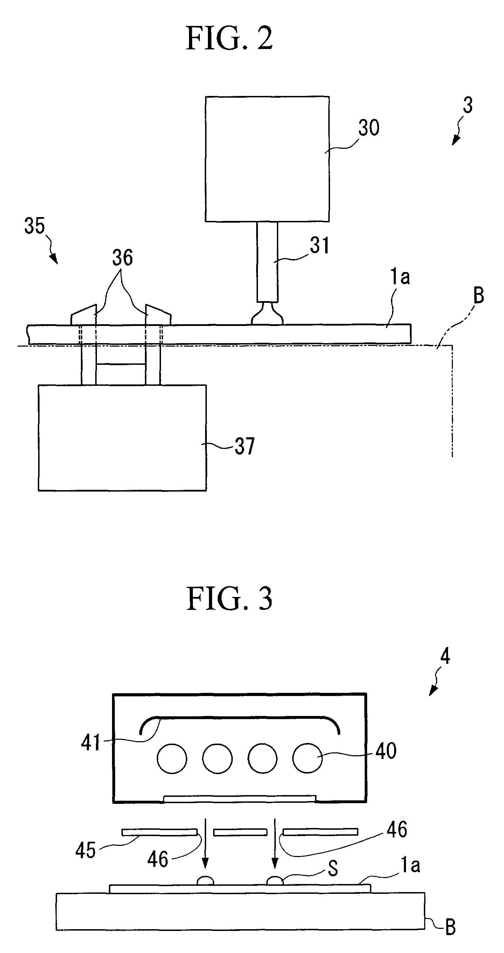

As shown in FIG. 2, the application device 3 includes a pump member (a discharge member) 30 and a disc substrate rotation driving member 35. The pump member 30 discharges a cationic type ultraviolet curable composition toward an adhering surface of the disc substrate 1a from a predetermined position at the adhesive composition application position B2 on the application stage B. The disc substrate rotation driving member 35 rotates the disc substrate 1a in the circumferential direction at the adhesive composition application position B2.

The pump member 30 includes a nozzle 31 from which the cationic type ultraviolet curable composition is discharged. The nozzle 31 is disposed with its end portion facing downward. The pump member 30 is fixed to a position where the end portion of the nozzle 31 is located near the adhering surface of the disc substrate 1a which is moved to the adhesive composition application position B2.

The disc substrate rotation driving member 35 includes a holding member 36 and a driving unit 37, and may be integrally formed with the application stage B. The holding member 36 retains the disc substrate 1a, which has been moved to the adhesive composition application position B2, by holding the central hole thereof. The driving unit 37 rotates the holding member 36 together with the disc substrate 1a in the circumferential direction.

Next, the operation of the application device 3 having the above-mentioned configuration will be described. The central hole of the disc substrate 1a which has been moved to the adhesive composition application position B2 is held by the holding member 36. Then, the cationic type ultraviolet curable composition is discharged from the tip of the nozzle 31 to the adhering surface of the disc substrate 1a.

The disc substrate rotation driving member 35 rotates the disc substrate 1a in the circumferential direction thereof in synchronization with the discharge of the cationic type ultraviolet curable composition from the nozzle 31. At that time, the time required for discharging an amount of the cationic type ultraviolet curable composition necessary for adhesion from the nozzle 31 is constant if the temperature of the cationic type ultraviolet curable composition satisfies predetermined conditions. Accordingly, the driving unit 37 is controlled so that the disc substrate 1a rotates exactly one time during the period of time which is required for the discharge of the cationic type ultraviolet curable composition. In this manner, the cationic type ultraviolet curable composition is applied onto the disc substrate 1a in a ring shape which is concentric with the disc substrate 1a.

As explained above, according to the application device 3 in this embodiment, since the cationic type ultraviolet curable composition may be applied from a position close to the adhering surface of the disc substrate 1a, problems, such as disturbance of the discharge path, are not caused and the accuracy in the application process may be improved.

Next, the ultraviolet radiation device 4, which radiates ultraviolet light onto the disc substrate 1a onto which the cationic type ultraviolet curable composition has been applied, will be explained.

As shown in FIG. 3, the ultraviolet radiation device 4 includes light sources 40 and a mask member (a radiation region restriction member) 45. The light sources 40 radiate ultraviolet light onto the disc substrate 1a, onto which the cationic type ultraviolet curable composition S has been applied, at the substrate transfer position B3 on the application stage B. The mask member 45 restricts the radiation region of the ultraviolet light from the light sources 40 to only the cationic type ultraviolet curable composition S.

In this embodiment, a flash type lamp device ("SBC 13", a product of Ushio Inc.) is adapted as the light sources 40, and the lamp device is disposed directly above the substrate transfer position B3.

As shown in FIG. 3, the mask member 45 is disposed between the application stage B and the light sources 40 so as to be parallel to the disc substrate 1a which has been transferred to the substrate transfer position B3. The mask member 45 has a ring-shaped opening 46 which matches the shape of the cationic type ultraviolet curable composition S so that the entire cationic type ultraviolet curable composition S can be viewed through the opening 46 but the substrate surface cannot be viewed from the radiation direction of the ultraviolet light.

It is preferable that the mask member 45 be made of a material which does not easily absorb light energy of ultraviolet light, visual light, and infrared light from the lamp device and have a high light reflectivity over the entire wavelength region of the above-mentioned light. This is because if the temperature of the mask member 45 is increased due to the absorption of light energy, the disc substrate 1a may be deformed by heat radiated from the mask member 45.

Next, the operation of the ultraviolet light radiation device 4 having the above-mentioned configuration will be explained.

The disc substrate 1a on which the cationic type ultraviolet curable composition S has been applied is transferred to the substrate transfer position B3 in accordance with the rotation of the application stage B. The disc substrate 1a is temporarily stopped at the substrate transfer position B3 and ultraviolet light is flashed repeatedly onto the cationic type ultraviolet curable composition S from the ultraviolet radiation device 4. The energy input to the lamp and the amount of radiation in one radiation process may be adjusted in accordance with the curing sensitivity of the cationic type ultraviolet curable composition used as the adhesive, for example.

As mentioned above, due to the ultraviolet light radiation device 4, it becomes possible to keep the information recording layer of the disc 1 away from the influence of heat from the light sources since the ultraviolet light may be radiated only onto the cationic type ultraviolet curable composition S which has been applied onto the adhering surface of the disc substrate 1a.

Also, since a flash lamp, which is adapted as the light sources 40, retains less heat as compared to a continuously lighting type light source, it is less likely that heat affects the disc substrate 1a on the application stage B or the cationic type ultraviolet curable composition S applied onto the adhering surface. In addition, the operation cost may be reduced since the amount of power consumption of the flash lamp is less than that of a continuously lighting type light source.

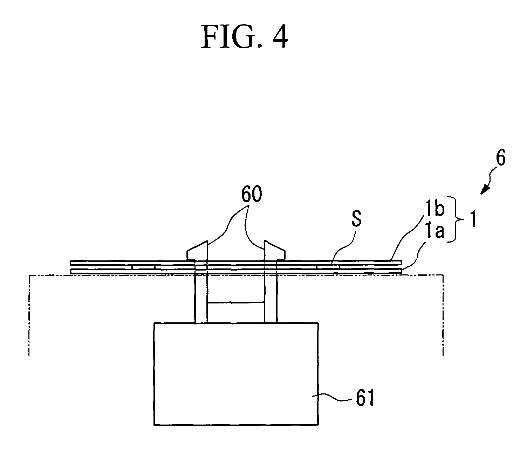

Next, the spreading device 6 which is used for the spreading process of the disc 1, in which the disc substrates 1a and 1b have been bonded, will be explained with reference to FIG. 4.

As shown in FIG. 4, the spreading device 6 includes a holding member 60 and a driving unit 61. The holding member 60 holds the disc substrates 1a and 1b which are bonded by the cationic type ultraviolet curable composition S, i.e., the disc 1, via the central hole thereof. The driving unit 61 rotates the holding member 60 together with the disc 1 in the circumferential direction.

The operation of the spreading device 6 having the above-mentioned configuration will be described as follows. The central hole of the disc 1, which has been transferred to the spreading device 6, is held by the holding member 60, and is rotated in the circumferential direction by the driving unit 61. When the disc 1 is rotated in the circumferential direction, centrifugal force is applied to the cationic type ultraviolet curable composition S which is present between the disc substrates 1a and 1b, and the composition S is spread in the radial direction while maintaining the concentric circle shape so that an adhesive layer having a uniform thickness is formed between the disc substrates 1a and 1b without any gap therebetween.

As mentioned above, due to the spreading device 6, since the cationic type ultraviolet curable composition S spreads in the radial direction while maintaining the concentric circle shape and since the adhesive layer having a uniform thickness is formed between the disc substrates 1a and 1b without any gap therebetween, problems, such as the generation of a gap between the disc substrates 1a and 1b due to an insufficiency in spreading the cationic type ultraviolet curable composition S, are not caused.

Note that although a spin type device which utilizes centrifugal force is adapted as the spreading device 6 in this embodiment of the invention, it is possible to use a press-type spreading device, which presses the disc 1 from both sides of the disc 1 as the spreading device 6.

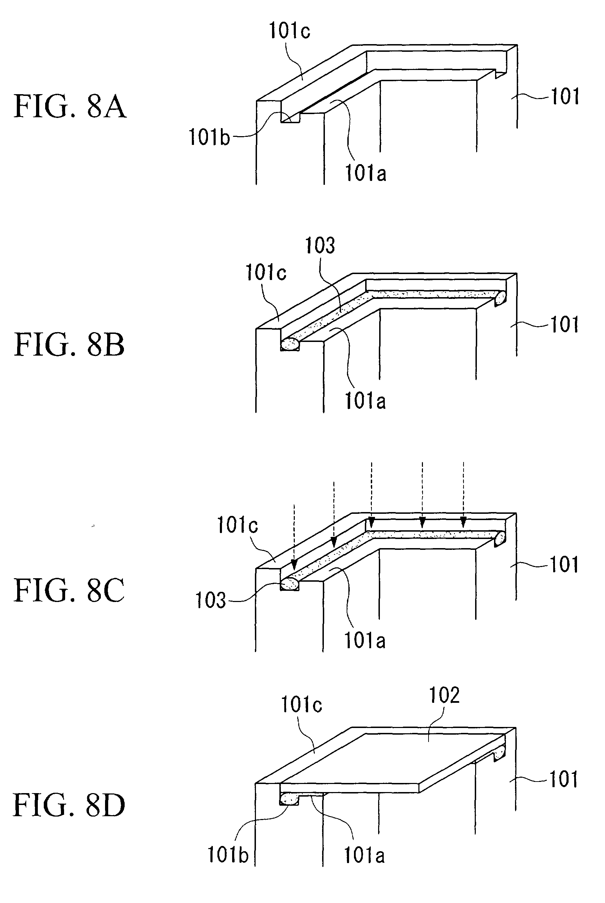

Next, a second embodiment of the present invention will be described with reference to FIGS. 8A through 8D. In this embodiment, a pipe member 101 and a plate member 102 are used as examples of the members to be bonded (adhered), and an explanation is made for a method of bonding the plate member 102 to an opening portion of the pipe member 101. FIGS. 8A through 8D show each step of the bonding method according to the second embodiment of the present invention in sequence.

Although the pipe member 101 is a square pipe and the plate member 102 is in a square shape for sealing the opening portion of the pipe member 101 in this embodiment, only a part of the pipe member 101 and a part of the plate member 102 are shown in FIGS. 8A through 8D for the convenience of explanation.

Also, as shown in FIG. 8A, a concave groove 101b is formed on the entire end face of the opening of the pipe member 101, and the height of a projected portion 101a located inside the groove 101b is lower than the height of a projected portion 101c located outside the groove 101b. As shown in FIG. 8D, the plate member 102 is formed into a shape which fits the shape of the projected portion 101c of the pipe member 101.

As shown in FIG. 8B, an ultraviolet curable composition 103 is applied into the concave groove 101b. In this embodiment, a material having a light absorption coefficient of about $2 \times 10^3$ m$^{-1}$ or less in a wavelength region between about 310 - 340 nm is used as the ultraviolet curable composition 103. Such an ultraviolet curable composition may be obtained by selectively using a material having a relatively small light absorption coefficient at 350 nm or less as photocationic polymerization initiator.

The amount of the ultraviolet curable composition 103 applied is a little larger than the space volume in the concave groove 101b so that a part of the ultraviolet curable composition 103 protrudes onto the projected portion 101a being compressed by the plate member 102 in the subsequent spreading process.

Then, as shown in FIG. 8C, ultraviolet light is radiated onto the ultraviolet curable composition which has been applied into the concave groove 101b.

Although not shown in the figures, the ultraviolet light may be radiated directly above the opening of the pipe member 101 by using a mask which restricts the radiation region of the ultraviolet light to only the ultraviolet curable composition 103. The amount of radiation of ultraviolet light may be adjusted in accordance with the curing sensitivity of the ultraviolet curable composition 103 used as the adhesive, for instance.

As mentioned above, since it is possible to radiate ultraviolet light onto only the ultraviolet curable composition 103 which is applied in the concave groove 101b by using a mask in the ultraviolet light radiation process, the pipe member 101 may be kept away from the effects of heat from the light source.

As shown in FIG. 8D, the plate member 102 is engaged with the opening portion of the pipe member 101 after the radiation of ultraviolet light, and the plate member 102 is pushed against the projected portion 101a of the pipe member 101 so that a part of the ultraviolet curable composition 103 in the concave groove 101b spreads onto the projected portion 101a.

In this manner, the pipe member 101 and the plate member 102 are bonded via the ultraviolet curable composition 103 in the concave groove 101b and on the projected portion 101a.

Since the ultraviolet curable composition 102 is present not only in the concave groove 101b formed around the opening portion of the pipe member 101 but also on the projected portion 101a between the pipe member 101 and the plate member 102, the area involved in bonding the two members 101 and 102 is increased, and hence, the adhesive strength is also increased. Moreover, since the adhesive composition layer formed by the ultraviolet curable composition 103 is formed around the entire opening portion of the pipe member 101 without any gaps, the bonding area of the adhesive composition is enlarged and the efficiency in sealing the opening portion of the pipe member 101 by the plate member 102 is increased.

Further, the bonding of the two members 101 and 102 may be carried out in a short amount of time by applying the ultraviolet curable composition 103 and engaging the two members after the radiation of ultraviolet light. In comparison, in a method in which a thermosetting type adhesive composition is used instead of an ultraviolet curable composition, a few hours is required for curing in the bonding process. Therefore, the time required for the bonding process is extremely short in the process according to the embodiment of the invention. Accordingly, the invention has various applications including a continuous process to improve the productivity thereof.

Note that although an example in which the plate member 102 is bonded to the opening portion of the pipe member 101 is explained in the above embodiment, the shape of each member or the member to be bonded may be varied or modified, and the adhering method of the invention may be applied to bonding members of various types.

Also, although the concave groove 1016 is formed around the end face of the opening of the pipe member 101, which is a member to be bonded, and the ultraviolet curable composition 103 is applied in the concave groove 101b, it is acceptable not to form a concave portion in the member to be bonded, and the ultraviolet curable composition can be applied onto a flat face. In this case, the other member to be bonded may be pressed against a portion onto which the ultraviolet curable composition has been applied so that the area of the composition is expanded. Accordingly, the two members are bonded in a state in which the ultraviolet curable composition has been spread, and a large adhering force and an excellent sealing property may be obtained.

Moreover, although a material having a light absorption coefficient of about $2 \times 10^3$ m$^{-1}$ or less in a wavelength region between about 310 - 340 nm is used as the ultraviolet curable composition in the above-mentioned embodiment, the composition only requires a property which enables the composition to spread (expand) to a required area by a suitable spreading method after the ultraviolet light radiation process. Accordingly, ultraviolet curable compositions other than the ones mentioned above may also be utilized depending on such factors as the shape and size of the members to be bonded or the required bonding state.

Next, adhesive compositions which may be used according to an embodiment of the present invention will be described.

According to an embodiment of the present invention, as a cationic type ultraviolet curable composition used as an adhesive composition, any known compositions or combinations thereof which are suitable for carrying out the invention may be selected and used. Examples of such compositions include an epoxy resin containing a cationic polymerization type photopolymerization initiator. Examples of the cationic polymerization type photopolymerization initiator include a sulfonium salt, an iodonium salt, and a diazonium salt.

A cationic polymerization type ultraviolet curable composition which contains a photocationic polymerization initiator and a glycidyl ether type epoxy resin may be used as an adhesive composition in the present invention. In order to make the composition have a light absorption coefficient of about $2 \times 10^3$ m$^{-1}$ or less in a wavelength region between about 310 - 340 nm, in particular, a photocationic polymerization initiator having a relatively small light absorption coefficient in the wavelength region between about 310 - 340 nm may be selected and used. Examples of the initiator which may satisfy such requirements include an onium salt whose cationic part is an aromatic sulfonium such as diphenyl-4-(phenylthio) phenylsulfonium and triphenyl sulfonium, or an aromatic iodonium such as diphenyl iodonium, bis (dodecylphenyl) iodonium and 4-methylphenyl-4-(1-methylethyl) phenyliodonium, and whose anionic part is $BF_4^-$, $PF_6^-$, $SbF_6^-$, $[BX_4]^-$ (where X is a phenyl group which is substituted by at least two fluorine atoms or trifluoromethyl groups). Also, although examples of an initiator which may be used together with the above initiator include an onium salt whose cationic part is an aromatic sulfonium such as bis[4-(diphenylsulfonio) phenyl]sulfide, and whose anionic part is $BF_4^-$, $PF_6^-$, $SbF_6^-$, $[BX_4]^-$ (where X is a phenyl group which is substituted by at least two fluorine atoms or trifluoromethyl groups), the absorption coefficient thereof is not so small. Accordingly, it is preferable that the amount of such a salt be small if used.

Further, in order to prevent partial curing on the surface, it is preferable that aliphatic polyol polyglycidylether be contained as a glycidylether type epoxy resin. Partial curing on the surface may be prevented by the presence of aliphatic polyol polyglycidylether which delays the polymerization of the composition after the radiation of light.

Examples of the aliphatic polyol polyglycidylether include ethyleneglycol diglycidyl ether, propyleneglycol diglycidyl ether, neopentylglycol diglycidyl ether, butanediol diglycidyl ether, hexanediol diglycidyl ether, cyclohexane dimethanol diglycidyl ether, polypropylene glycoldiglycidyl ether, trimethylol propane-di and/or tri-glycidyl ether, pentaerythritol-tri and/or tetraglycidyl ether, and sorbitol-hepta and/or hexa-glycidyl ether.

As mentioned above, according to the embodiments of the present invention, since the ultraviolet curable composition may be applied from a position close to the portion to be bonded, problems, such as a disturbance in the discharge path of the composition, are not caused, and the accuracy in the application process may be improved. Accordingly, it becomes possible to prevent problems such as the generation of a protruded portion of the ultraviolet curable composition and as the generation of a gap between members.

Also, according to the present invention, it becomes possible to obtain a large adhesive force by increasing the bonding area of the two members to be bonded by spreading an ultraviolet curable composition after radiating ultraviolet light onto the ultraviolet curable composition applied onto the members to be bonded. In this manner, a good sealing property may also be obtained.

Moreover, the members to be bonded may be adhered in a short amount of time by bonding one of the members to the other via an ultraviolet curable composition after radiating ultraviolet light onto the composition. Accordingly, the invention has various applications including a continuous manufacturing process, and can contribute to an improvement in the productivity thereof due to the extremely short amount of time required for the bonding process compared to the bonding process using hot-melt adhesive.

Further, since an ultraviolet curable composition having a light absorption coefficient of about $2 \times 10^3$ m$^{-1}$ or less in a wavelength region between about 310 - 340 nm is used, the ultraviolet light is sufficiently transmitted to the inside of the composition, and hence, a difference in the curing state does not tend to occur between the surface and the inside of the composition. Accordingly, the ultraviolet curable composition can uniformly spread in the spreading process. Thus, an adhesive layer is uniformly formed between the members to be bonded, and it becomes possible to prevent problems such as the generation of a protruded portion of the ultraviolet curable composition and as the generation of a gap between the members.

Having thus described several exemplary embodiments of the invention, it will be apparent that various alterations, modifications, and improvements will readily occur to those skilled in the art. Such alterations, modifications, and improvements, though not expressly described above, are nonetheless intended and implied to be within the spirit and scope of the invention. Accordingly, the invention is limited and defined only by the following claims and equivalents thereto.

**Claims**

1. A method for bonding two members (101, 102) via an ultraviolet curable composition (103), comprising the steps of:

    applying said ultraviolet curable composition onto a part of a bonding area in one of said members;
    radiating ultraviolet light onto said ultraviolet curable composition;
    bonding said member to the other member via said ultraviolet curable composition which has been radiated by the ultraviolet light; and
    spreading said ultraviolet curable composition which is present between said members, wherein
    said ultraviolet curable composition is a cationic polymerization type ultraviolet curable composition.

2. A method for bonding members according to claim 1, wherein
the light absorption coefficient of said cationic polymerization type ultraviolet curable composition is about $2 \times 10^3$ m$^{-1}$ or less in a wavelength region between about 310 - 340 nm.

3. A method for bonding members according to claim 1 or 2, wherein
the ultraviolet light is radiated only onto said ultraviolet curable composition which is applied onto said bonding area.

4. A method for manufacturing discs by bonding two disc substrates (1a, 1b) using a cationic polymerization type ultraviolet curable composition (S) as an adhesive to produce a disc (1), comprising the steps of:

applying said cationic polymerization type ultraviolet curable composition onto a part of an adhering surface of one of said two disc substrates;
radiating ultraviolet light onto said cationic polymerization type ultraviolet curable composition;
bonding said disc substrate to the other disc substrate via said cationic polymerization type ultraviolet curable composition which has been irradiated by the ultraviolet light; and
spreading said cationic polymerization type ultraviolet curable composition which is present between said two disc substrates.

5. A method for manufacturing discs according to claim 4, wherein
the light absorption coefficient of said cationic polymerization type ultraviolet curable composition is about $2 \times 10^3$ m$^{-1}$ or less in a wavelength region between about 310 - 340 nm.

6. A method for manufacturing discs according to claim 4 or 5, wherein
said cationic polymerization type ultraviolet curable composition is applied so as to be concentric with said disc substrate.

7. A method for manufacturing discs according to any one of claims 4-6, wherein
the ultraviolet light is radiated only onto said cationic polymerization type ultraviolet curable composition which is applied onto said adhering surface.

8. A method for manufacturing discs according to any one of claims 4-7, wherein
said two disc substrates bonded via said cationic polymerization type ultraviolet curable composition are rotated in the circumferential direction when said cationic polymerization type ultraviolet curable composition is spread.

9. A method for manufacturing discs according to any one of claims 4-8, wherein said discs are digital video discs or digital versatile discs (DVDs).

10. A disc manufacturing device which produces discs (1) by bonding two disc substrates (1a, 1b) using a cationic polymerization type ultraviolet curable composition (S) as an adhesive, comprising:

an application device (3) which applies said cationic polymerization type ultraviolet curable composition onto a part of an adhering surface of one of said two disc substrates;
an ultraviolet light radiation device (4) which radiates ultraviolet light onto said cationic polymerization type ultraviolet curable composition;
an adhering device (5) which adheres said disc substrate to the other disc substrate via said cationic polymerization type ultraviolet curable composition which has been irradiated by the ultraviolet light; and
a spreading device (6) which spreads said cationic polymerization type ultraviolet curable composition which is present between said two disc substrates.

11. A disc manufacturing device according to claim 10, wherein
said application device comprises a discharge member (31) and a disc substrate rotation driving member (37), said discharge member discharging said cationic polymerization type ultraviolet curable composition toward said adhering surface from a predetermined position, and said disc substrate rotation driving member rotating said disc substrate having said adhering surface in the circumferential direction.

12. A disc manufacturing device according to claim 10 or 11, wherein
said ultraviolet light radiation device comprises a light source (40) and a radiation region restriction member (45), said light source radiating ultraviolet light onto said disc substrate onto which said cationic polymerization type ultraviolet curable composition has been applied, and said radiation region restriction member restricting a radiation region of the ultraviolet light from said light source only to said cationic polymerization type ultraviolet curable composition.

**13.** A disc manufacturing device according to any one of claims 10-12, wherein

said spreading device comprises a disc rotation driving unit (60, 61) which holds said two disc substrates bonded via said cationic polymerization type ultraviolet curable composition and rotates said two disc substrates in the circumferential direction.

# FIG. 1

EP 1 203 658 A1

# FIG. 2

# FIG. 3

# FIG. 4

FIG. 5

EP 1 203 658 A1

FIG. 6

## FIG. 7A

## FIG. 7B

FIG. 8A

101c

101

101b

101a

FIG. 8B

103

101c

101

101a

FIG. 8C

101c

103

101

101a

FIG. 8D

101c

102

101

101b

101a

**European Patent Office**

## EUROPEAN SEARCH REPORT

Application Number

EP 01 12 5449

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 005 037 A (DAINIPPON INK & CHEMICALS) 31 May 2000 (2000-05-31) * figures 1,6,8 * | 10,11,13 | B32B31/12 G11B7/26 B29C65/48 C09J5/00 |
| Y | * page 12, line 16 – line 58; example 2 * | 1,3,4, 6-9 | |
| Y | EP 0 735 530 A (TOSHIBA EMI KK) 2 October 1996 (1996-10-02) * page 3, column 3, line 15 – line 42 * * page 4, column 5, line 7 – line 13; figure 1D * * page 5, column 8, line 40 – page 6, column 9, line 36; figure 5 * | 1,3,4, 6-9 | |
| A | WO 00 21082 A (TAKASE HIDEAKI ;YASHIRO TAKAO (JP); JSR CORP (JP); UKACHI TAKASHI) 13 April 2000 (2000-04-13) * page 2, line 29 – page 4, line 17 * * page 5, line 29 – page 7, line 3 * * page 22, line 24 – line 29 * * page 28, line 13 – page 29, line 22 * | 2,5 | |
| | | | TECHNICAL FIELDS SEARCHED (Int.Cl.7) |
| | | | B32B G11B B29C C09J |

The present search report has been drawn up for all claims

| Place of search | Date of completion of the search | Examiner |
|---|---|---|
| MUNICH | 21 February 2002 | Lindner, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 203 658 A1**

## ANNEX TO THE EUROPEAN SEARCH REPORT
## ON EUROPEAN PATENT APPLICATION NO.

EP 01 12 5449

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2002

| Patent document cited in search report | | | Publication date | Patent family member(s) | | Publication date |
|---|---|---|---|---|---|---|
| EP 1005037 | A | | 31-05-2000 | EP | 1005037 A1 | 31-05-2000 |
| | | | | CN | 1272943 T | 08-11-2000 |
| | | | | WO | 9966506 A1 | 23-12-1999 |
| EP 0735530 | A | | 02-10-1996 | JP | 2661884 B2 | 08-10-1997 |
| | | | | JP | 8273212 A | 18-10-1996 |
| | | | | DE | 69605223 D1 | 30-12-1999 |
| | | | | DE | 69605223 T2 | 16-03-2000 |
| | | | | EP | 0735530 A1 | 02-10-1996 |
| | | | | US | 5728250 A | 17-03-1998 |
| | | | | US | 5961777 A | 05-10-1999 |
| WO 0021082 | A | | 13-04-2000 | JP | 2000113530 A | 21-04-2000 |
| | | | | CN | 1329743 T | 02-01-2002 |
| | | | | EP | 1138040 A1 | 04-10-2001 |
| | | | | WO | 0021082 A1 | 13-04-2000 |
| | | | | US | 2001046644 A1 | 29-11-2001 |

EPO FORM P0459

For more details about this annex : see Official Journal of the European Patent Office, No. 12/82

23